# EUROPEAN PATENT SPECIFICATION

(11) **EP 1 111 890 B1**
(45) Date of publication and mention of the grant of the patent: **25.03.2009**
(21) Application number: 00650185.2
(22) Date of filing: 13.11.2000
(51) Int. Cl.: H04M 3/523, H04Q 3/64

(54) **Automatic (dynamic) network skill-based routing**
Automatische und dynamische auf Geschicklichkeit basierte Netzwerkleitweglenkung
Acheminement automatique et dynamique dans un réseau basé sur l'habileté

(30) Priority: 23.12.1999 US 471143
(43) Date of publication of application: 27.06.2001
(73) Proprietor: Nortel Networks Limited, St Laurent, Québec H4S 2A9 (CA)
(72) Inventor: Allen, Rosanne J., Toronto, Ontario, M6S 2Y9 (CA)
(74) Representative: Boyce, Conor

(56) References cited:
- EP-A- 0 920 224
- US-A- 5 940 497
- US-A- 5 946 387
- US-A- 5 970 065
- US-A- 5 991 391

## Description

The present invention relates to routing calls in networked call centers and, more particularly, to automatic (dynamic), network skill-based routing.

### BACKGROUND OF THE INVENTION

A call center is a common interface between a commercial interest and its customers. A toll-free telephone number is often provided to customers as a source of such services as product information and technical support. Agents are hired to receive incoming calls and provide the customers that call the toll-free telephone number with a service. Call centers may also be a source of outbound calls. Agents place calls which may, for instance, follow-up the provision of a service, announce new products or schedule a delivery.

Call centers are typically low margin, high volume operations, and even small improvements in efficiency can have significant effect on the commercial viability of a center. Historically, the call center has premises-based switching relying on a single-switch-to-single-network configuration. Customer requests enter via the public-switched telephone network (PSTN), usually via a Private Branch Exchange (PBX), such as a Meridian 1 (from Nortel Networks Corporation of Montreal, Canada), to an automatic call distributor (ACD) providing the control mechanism, such as the Symposium Call Center Server (from Nortel Networks Corporation of Montreal, Canada). An ACD is telecommunications software used in a digital computer that automatically answers calls, queues calls, distributes calls to agents, and plays delay announcements. U.S. Patent No. 4,451,705 discloses a known type of ACD. When a call is received by the ACD it is assigned to a directory number (DN), or queue, for a particular agent or pool of agents. If all the agents assigned to that DN are busy, the call enters the DN queue and waits for one of the agents to take the call. The selection criteria for sending a call to a DN can be altered by supervisors to compensate for agents who are leaving at the end of a shift, competence of the agent, or any factor influencing the amount of time a caller must wait for an agent. An ACD may also provide detailed reporting to management on the performance of the agents and their tasks, reporting statistics and number of calls handled and the time spent in various stages of the call.

Interactive Voice Response (IVR) units may be connected to the ACD allowing additional information to be collected from a caller about the nature of the call and skills an agent may be required to have in order to properly service the call. The caller can be asked a series of questions, and the responses, either spoken or Dual Tone Multi-Frequency (DTMF) inputs from a key pad, can be used to provide additional information to the ACD allowing the call to be routed to an agent who is suited to respond to the caller. Agents at a call center may perform a variety of duties and functions, many of which will require specialized training or knowledge to be performed effectively. In many instances, agents will have specific skill sets and are trained only to handle certain functions and are unable to assist callers with functions outside their knowledge base.

Agents with certain skills may be in high demand in one region, or during certain peak time periods and idle at another. As the use of call centers develops into an international business, special attention must be placed on cultural and linguistic demands of crossing borders. Cultural sensitivity as well as language fluency can not be expected of each and every call center employee for each and every potential client. Cultural sensitivity and language fluency as well as other skill sets must then be managed and built into call center design.

At a call center server, certain skills may be grouped into skillsets and the skillsets internally assigned an electronic identifier. The identifier may then be electronically assigned to an agent having the skills that define the skillset. Skill-Based Routing (SBR) allows call routing based on criteria such as service requirements of a call and the skills of available agents.

An Integrated Call Center Management system (ICCM) associated with an ACD allows SBR within a call center. When a call arrives at a call center server through mechanisms such as IVR or Automatic Number Identification (ANI), an ICCM can determine the agents in the skillset necessary to service the caller. If those agents are busy, or if that call center does not have an agent in the appropriate skillset, the call may be placed in a queue for the next available agent in the appropriate skillset or manually transferred to another call center in order to be assisted with an agent in the appropriate skillset.

Network Call Processing (NCP) is used to route calls seamlessly to qualified agents between call centers in a network. A large corporation may have multiple call centers at sites that are geographically dispersed but linked together in a network. In known systems, if a call center at site **A** did not have any available agents in the appropriate skillset, a call could be sent to a call center at site **B** via the ACD-DN where it would be queued the appropriate skillset. However, there was no guarantee the call center at site **B** would have an agent available in the appropriate skillset.

In US5,946,387 to Miloslavsky, calls are routed to call centres by a network level Service Control Point (SCP), and the calls are routed within each call centre by a call centre processor. Each call centre processor (and a processor associated with the SCP) stores routing tables and selects a particular routing table based on current call centre statistics. Additionally, some call centre information is reported back to the SCP: the SCP uses this information in routing incoming calls to the call centres.

In one known approach, network skillsets are defined with a name and electronic identifier that relate the same skillset at each call center on the network. A network control center is introduced whereat a record of the status of each network skillset and call center may be maintained. A call may be queued to a network skillset at multiple call centers. When an agent becomes available to answer the call at one of the call centers, the agent is reserved and the site transferring the call routes the call to the site with the reserved agent. Thus, before a call is transferred to the next call center, the system knows whether the caller can be helped at the next center. Calls are networked using a network automatic call distributor (NACD). To queue a call to a network skillset at multiple sites, a NACD consults a routing table. A routing table for a particular network skillset comprises a list of sites having agents in that particular network skillset, ranked according to a routing preference. Routing tables are defined for each skillset at each call center and the site rankings are configured and periodically updated by an administrator at a Network Control Center (NCC). These tables are relatively static. However, the routing tables may be updated in either a scheduled or ad-hoc manner. To provide good service to a caller, an administrator is required to monitor the system and make changes to the routing tables.

Routing tables are used to logically queue calls to multiple network skillsets that may be local or located at remote call centers. It is the responsibility of the call center to reserve an agent when an agent is available to answer the network call. Once a target call center at a particular call center reserves an agent, the call is routed to the target PBX where the call is presented to the reserved agent.

Shortcomings of systems employing administrator configured routing tables include a requirement for close monitoring of the system in order to make any necessary adjustments to the routing tables in a timely manner. Solutions exist wherein a control center may be used to manage a network of call center servers by retrieving real-time events and data from each call center and routing calls at the network level based on this information. However, network level routing solutions do not reserve agents. There is no guarantee that an agent will be available to answer the call when the call is sent.

### SUMMARY OF THE INVENTION

Instead of a call center network administrator making manual changes or scheduled changes to routing tables, a system employing the present invention automatically changes routing tables based on call center management information. In a network of call centers, each call center sends call center management information to a network call center controller at a regular interval. An administrator can configure a routing preference for each network skillset. At a regular interval, the received call center management information is evaluated by the network call center controller, based on the administrator configured routing preferences, and updated routing tables are automatically determined for each network skillset. The updated routing tables are then sent, by the network call center controller, to each call center. Each call center then uses the updated routing tables to queue inbound calls to multiple remote call center servers as well as locally.

In accordance with an aspect of the present invention there is provided a method of distributing routing tables to a plurality of call centers, each having one or more agents, the method including receiving, from one or more of the plurality of call centers, call center management information, determining, based on the management information, a routing table, the routing table providing information for routing calls requiring a network skillset to call centers having one or more agents associated with the network skillset and communicating the routing table to the plurality of call centers. In another aspect of the present invention a controller is provided to carry out this method. In a further aspect of the present invention a computer software media product permits a general purpose computer to carry out the method.

In accordance with another aspect of the present invention there is provided a communications network including a plurality of call centers, each having one or more agents associated with a network skillset, a controller for automatically distributing a routing table providing information for routing calls requiring a network skillset to the call centers and a router for routing, based on the routing table, a call, requiring the network skillset, received at one of the call centers to an available agent associated with the network skillset at one of the call centers.

In accordance with a further aspect of the present invention there is provided a method of updating routing tables at a call center, the method including sending, to a controller of a plurality of call centers, call center management information and receiving, from the controller, a dynamic routing table that provides information for routing calls requiring a network skillset, the dynamic routing table determined based, in part, on the management information. In another aspect of the present invention a call center is provided to carry out this method. In a further aspect of the present invention a computer software media product permits a general purpose computer to carry out the method.

Other aspects and features of the present invention will become apparent to those ordinarily skilled in the art upon review of the following description of specific embodiments of the invention in conjunction with the accompanying figures.

### BRIEF DESCRIPTION OF THE DRAWINGS

In the figures which illustrate example embodiments of this invention:
FIG. 1 schematically illustrates a configuration of a network of call centers including a network control center in accordance with an embodiment of the present invention; and
FIG. 2 illustrates, in a flow diagram, routing table distribution steps followed by a network control center in accordance with an embodiment of the present invention.

### DETAILED DESCRIPTION OF THE PREFERRED EMBODIMENTS

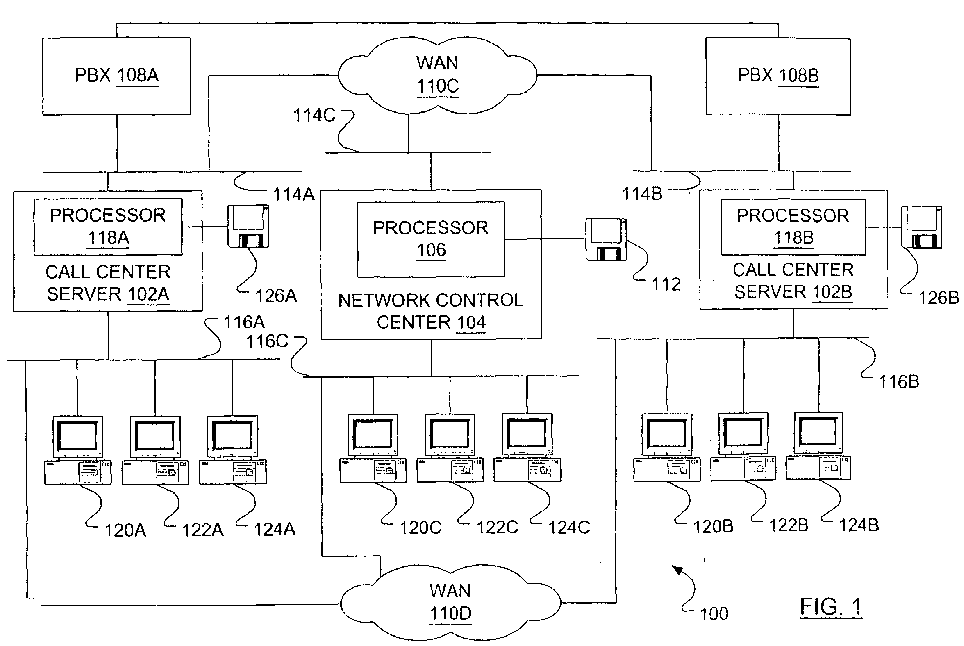

FIG. 1 illustrates a networked system of call centers **100**, where the call centers are distributed at separate sites. A Site "A" comprises a call center server (CCS) **102A** connected via an embedded local area network (ELAN) **114A** to a communication routing system, such as a Private Branch Exchange (PBX) **108A**, for routing communications. It will be appreciated that there are alternative means for routing communications, such as over a local area network or the Internet, which will provide this function as well. CCS **102A** is also connected to a number of supervisor and administrator workstations **120A**, **122A**, **124A** via a customer LAN (CLAN) **116A**. A Site "B" comprises a CCS **102B** connected via an ELAN **114B** to a PBX **108B**. CCS **102B** is also connected to a number of supervisor and administrator workstations **120B**, **122B**, **124B** via a CLAN **116B.** A network control center (NCC) **104** is at an NCC site and is connected to an ELAN **114C** which is networkcd with ELAN **114A** and ELAN **114B** via a wide area network (WAN) **110C**. Similarly, a CLAN **116C** to which NCC **104** is connected is networked with CLAN **116A** and CLAN **116B** via WAN **110D**Connected to CLAN **116C** are administrator workstations **120C**, **122C**, and **124C**. Any means of data communication between CCS **102A** and CCS **102B**, including the public switched telephone network (PSTN), is acceptable, however, the preferred embodiment is via a high speed digital data network such as WAN **110C** based on ISDN or equivalent architecture. NCC **104** includes a processor **106** loaded with automatic network skill-based routing software for executing a method of this invention from software medium **112**. Call center servers **102** and **102B** include processors **118A** and **118B** loaded with routing table updating software for executing a method of this invention from software medium **126A** and **126B**, respectively. Software media **112**, **126A** and **126B** may be disk, tape, chip or random access memory containing a file downloaded from a remote source.

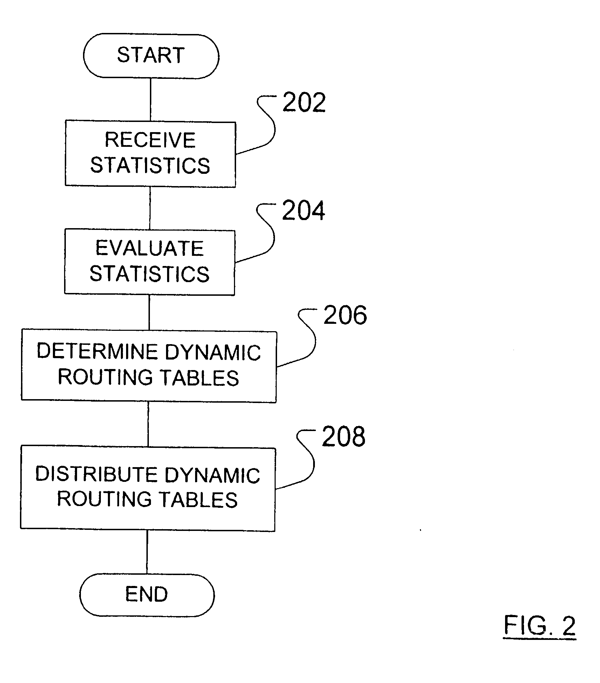

Turning to FIG. 2, in overview, each CCS **102A, 102B** sends to NCC **104** call center management information (for instance, real-time skillset statistics) at a regular interval. An administrator, at NCC **104**, can configure routing preferences for each network skillset. At a regular interval, the real-time skillset statistics are received (step **202**), and evaluated (step **204**) by NCC **104**, based on the administrator configured routing preferences. Updated dynamic routing tables are then automatically determined (step **206**) for each network skillset. The updated dynamic routing tables are subsequently distributed (step **208**) by NCC **104** to each CCS **102A**, **102B**. Each CCS **102A, 102B** uses the updated dynamic routing tables to queue inbound calls to multiple remote call center servers as well as locally.

In a preferred embodiment of the present invention, each call that is queued to a network skillset is logically queued to a network skillset at the three most optimal call centers. That is to say that a preferred dynamic routing table comprises three sites ranked as most optimal given received statistics. It has been determined that the likelihood that a call is answered in a queue beyond the third queue to which a call is logically queued is insignificant. However, the number of call centers to which to queue a call may be configurable by an administrator of a particular call center.

The rate at which call center management information (for instance, real-time skillset statistics) for network skillsets is sent to NCC **104** from each site is configurable at NCC **104**. The rate at which NCC **104** is updated with real-time statistics affects the determination of dynamic routing tables (discussed hereinafter). An administrator may select an update rate of every five seconds for the statistics from each CCS for dynamic routing table determination. The update rate selected for receipt of statistics from each CCS for dynamic routing table determination is also the rate at which the dynamic routing tables are sent to each site.

Update rates may be changed at any time. If the update rate of the statistics being sent to a NCC from each CCS is changed, then each site is informed of the change and the statistics are sent by each CCS at the new update rate.

One factor that affects the determination of dynamic routing tables is the state of a network skillset, where a state might be "on-line" or "off-line". An off-line state may be due to an out-of-service mode or a transitional mode. Another factor is the state of a "filter timer" for a particular site, which may be set due to problems sending calls to that site. Further, the routing preferences configured for each network skillset affect the determination. As well, dynamic routing table determination may be affected by the real-time network skillset statistics received by NCC **104**.

If there are agents available for a network skillset, then routing preferences used in the determination of a dynamic routing table relating to a particular network skillset may include "Number Of Idle Agents"; "Longest Agent Idle Time Since Last Call"; and "Longest Agent Idle Time Since Login". Note that each network skillset may be configured differently for each call center. If the greatest "Number of Idle Agents" is chosen as a routing preference for a network skillset, then the sites are ranked by the number of idle agents. If "Longest Agent Idle Time Since Last Call" is chosen as a routing preference for a network skillset, then the sites are ranked by the longest agent idle time (since their last call). If "Longest Agent Idle Time Since Login" is chosen as a routing preference for a network skillset, then the sites are ranked by the longest agent idle time (since login). As will be apparent to a person skilled in the art, the administrator may configure a formula which combines various routing preferences (such as "Number Of Idle Agents", "Longest Agent Idle Time Since Last Call", "Longest Agent Idle Time Since Login", etc.). The formula may assign different weights to individual routing preferences. After the sites (call centers) are ranked, a pre-set number of the top ranked sites may assigned, in ranked order, to the dynamic routing table for the network skillset of interest. Consistent with the earlier example, no more than three sites would be included in this ranked list of sites. Alternatively, a ranked list of all call centers in the network may be sent to each call center and the number of sites to maintain in a routing table may be configured for each network skillset at each call center.

If there are no agents available for a network skillset, then an "Expected Wait Time" routing preference may be used in the determination of a dynamic routing table relating to a network skillset. The sites are ranked by the expected wait time in ascending order for the network skillset. After the sites are ranked, a pre-set number of the top ranked sites are assigned, in ranked order, to the dynamic routing table for the network skillset of interest.

If agents are available at fewer than a pre-set number of (say, three) sites, then the "Number Of Available Agents" routing preference may be used for the sites that have agents available and the remaining sites may be ranked with the routing preference chosen for no available agents (expected wait time). After the sites are ranked, a pre-set number of the top ranked sites are assigned, in ranked order, to the dynamic routing table for the network skillset of interest. Note that one administrator configured formula may be used to assess those sites with available agents and another formula used for those sites without available agents.

Turning to FIG. **1**, call center site **A** receives notification of an incoming call and a particular network skillset identifier, such as "sales". Call center server **102A** retrieves, from memory, the routing table for the "sales" network skillset and logically queues the call at all sites in the routing table utilizing WAN **110C** to send queuing information to other call center servers. At one of the call centers in the routing table, an agent in the appropriate skillset is determined to be available and that availability is communicated to call center server **102A**. The call is then sent to the call center with the available agent in the "sales" network skillset where it arrives and is answered by the agent. The site at which the call has arrived sends a message to call center server **102A** indicating that the call has arrived. Call center server **102A** then sends a message to each remaining site in the routing table to de-queue the call.

Alternatively, the site ranked first in the retrieved routing table is queried, by call center server **102A**, for an available agent in the "sales" network skillset. If all the agents with the "sales" network skillset identification are busy at the site ranked first, call center server **102A** attempts to route the call to the site ranked second. If a response from the site ranked second reveals there are no available agents, the site ranked third is queried next. Assuming a routing table size of three, the series can he repeated until an agent at one of the three sites becomes available. Alternatively, the caller may be directed to another agent or asked to leave a voice mail message.

It is preferred that, once a call is transferred to another call center, an agent with the appropriate network skillset be available to receive the call when it arrives at the receiving call center. An agent reservation system may be used to ensure this availability. In such a system, a sending call center server (say, **102A** in FIG. **1**) sends a message to a call center server (say, **102B** in FIG. 1) at a site in the routing table appropriate to the network skillset required for the call. The message requests an agent, assigned with the network skillset identification X, to be assigned to a call with a particular identification number Y. Call center server **102B** determines if an agent with network skillset X is available. If such an agent is available, agent T is reserved for call Y, call center server **102A** is informed that agent T has been reserved for call Y, an agent reserve timer is started, and, if the time reaches a preset value without receiving the call from call center server **102A,** agent T is unreserved. If no agent is available, call Y may be sent to a network skillset queue to await an available agent. If no agent is available at call center server **102B**, call center server **102A** would normally query the next call center on its routing table to determine if there is an agent with the appropriate network skillset available. However, if there are no network skillset agents available at the other centers, such as if they have closed for the night, or no agents with the appropriate network skillset are logged into the system, the call may be placed in separate queue at each of multiple sites, where each of the multiple sites has at least one agent with the appropriate network skillset, but none currently available.

During the configuration of each network skillset, an administrator can choose between using the aforedescribed dynamic routing tables (Dynamic Routing) and using a pre-configured static routing table (Table Routing). Even if Dynamic Routing is chosen, static routing tables are required to be pre-configured, primarily for backup purposes and to break ties in the statistics. For example, a routing preference for greatest "Number of Idle Agents" may be chosen and, at the time of a call routing decision, two sites may have the same "Number Of Idle Agents". In this case, the target site with the highest ranking in a pre-configured static routing table may be called the "best site" to which to route the call. The administrator may pre-configure static routing tables by ranking the sites in terms of the number of hops a call must make in order to go from the source site to the target site. Using these ranking criteria, the target site for which an associated route, from the source site, has the fewest number of hops is ranked highest and the target site for which an associated route, from the source site, has the greatest number of hops is ranked lowest. This minimizes the number of trunks used to network a call.

A "Stale Data Timer" may be used to determine whether a current set of data received from another site is current enough to use. There may be a "Stale Data Timer" at NCC **104** and at CCS **102A**, **102B**. The CCS Stale Data Timer may be used to determine whether the dynamic routing table is too old to be used. More particularly, each CCS site requests dynamic routing tables from the NCC. If the network is slow or the NCC is slow, then the updates of dynamic routing tables may not he received by the CCS in a reasonable amount of time. Consider an example wherein the update rate for a dynamic routing table for a particular network skillset is configured to be six per minute (every ten seconds) and the last update of the dynamic routing table was 35 seconds ago. If the stale data timer is set to 30 seconds, then, instead of using the dynamic routing table, a pre-configured static routing table may be used to network calls, as the dynamic routing table is too old to use. The NCC Stale Data Timer may be used to determine whether the real-time statistics received from a particular CCS are too old, in which case, the particular CCS may be excluded from a dynamic routing table.

In a preferred embodiment of the present invention, the range of values for the "Stale Data Timer" is 10 to 240 seconds.

Other modifications will be apparent to those skilled in the art and, therefore, the invention is defined in the claims.

## Claims

1. A method, at a controller (104), of distributing routing tables to a plurality of call centers (102A, 108A, 120A, 122A, 124A; 102B, 108B, 120B, 122B, 124B), each having one or more agents, said method comprising:
receiving, from one or more of said plurality of call centers, call center management information;
determining, based on said management information, a routing table, said routing table providing information for routing calls requiring a network skillset to call centers having one or more agents associated with said network skillset; and
communicating said routing table to said plurality of call centers.

2. The method of claim 1 wherein said determining is based on a routing preference, which is affected by said management information.

3. The method of claim 2 wherein said determining ranks call centers (102A, 108A, 120A, 122A, 124A; 102B, 108B, 120B, 122B, 124B) having network skillset agents in an order of priority for routing calls and assigns call centers to said routing table in ranked order.

4. The method of claim 3 wherein said assigning comprises assigning only a pre-set number of most optimal call centers, based on said ranking, to said routing table in ranked order.

5. The method of claim 3 wherein said determining further comprises:
determining an age of said management information last received from a given call center; and
excluding said given call center from said routing table if said age exceeds a maximum.

6. The method of claim 1 wherein one element of said management information, from one said call center, comprises a number of agents at said call center assigned to said network skillset which are idle.

7. The method of claim 1 wherein one element of said management information, from one said call center, comprises a measure of time since a last call for an idle one of said agents associated with said network skillset at said one said call center, where said measure of time is longer for said idle one of said agents than for any other idle agent among said agents associated with said network skillset at said one said call center.

8. The method of claim 1 wherein one element of said management information, from one said call center, comprises a measure of time since login for an idle one of said agents associated with said network skillset at said one said call center, where said measure of time is longer for said idle one of said agents than for any other idle agent among said agents associated with said network skillset at said one said call center.

9. The method of claim 1 wherein one element of said management information, from one said call center at which all said agents associated with said network skillset are busy, comprises an estimate of a measure of time before one said agent associated with said network skillset becomes available to answer a particular call.

10. A computer readable medium (112) for providing program control for a processor (106) in a controller (104) of a plurality of call centers (102A, 108A, 120A,122A, 124A; 102B, 108B, 120B, 122B, 124B), each having one or more agents, said controller for distributing routing tables to said call centers, said computer readable medium comprising code means adapting said controller to perform the method claim 1.

11. A controller (104) of a plurality of call centers (102A, 108A, 120A, 122A, 124A; 102B, 108B, 120B, 122B, 124B), each having one or more agents, said controller comprising:
means for receiving, from one or more of said plurality of call centers, call center management information;
means for determining, based on said management information, a routing table, said routing table providing information for routing calls requiring a network skillset to call centers having one or more agents associated with said network skillset; and
means for communicating said routing table to said plurality of call centers.

12. A communications network comprising:
a controller (104) according to claim 11;
a plurality of call centers(102A, 108A, 120A, 122A, 124A; 102B, 108B, 120B, 122B, 124B), each having one or more agents associated with a network skillset; and
a router (102A, 102B) for routing, based on said routing table, a call, requiring said network skillset, received at one of said call centers to an available agent associated with said network skillset at one of said call centers.

13. A method of updating routing tables at a call center, said method comprising:
sending, to a controller (104) of a plurality of call centers (102A, 108A, 120A, 122A, 124A; 102B, 108B, 120B, 122B, 124B), call center management information; and
receiving, from said controller (104), a dynamic routing table that provides information for routing calls requiring a network skillset, said dynamic routing table determined based, in part, on said management information.

14. The method of claim 13 further comprising routing an incoming call requiring said network skillset to a call center based on based on said dynamic routing table.

15. The method of claim 13 further comprising receiving, from said controller (104), a static routing table that provides information for routing calls requiring said network skillset.

16. The method of claim 15 further comprising:
determining an age of said dynamic routing table; and
if said age exceeds a maximum, basing said routing on said static routing table.

17. The method of claim 15 wherein said routing is configured to be based on said static routing table.

18. A computer readable medium (126A) for providing program control for a processor (118A) in a call center (102A, 108A, 120A, 122A, 124A) in a network of call centers, said network including a controller (104) of said call centers, said computer readable medium comprising code means adapting said call center to perform the method of claim 13.

19. A call center (102A, 108A, 120A, 120B, 120C) in a network of call centers, said network including a controller of said call centers, said call center comprising:
means for sending, to said controller (104), call center management information; and
means for receiving, from said controller, a dynamic routing table that provides information for routing calls requiring a network skillset, said dynamic routing table determined based, in part, on said management information.

## Patentansprüche

1. Verfahren, an einer Steuerung (104), zum Verteilen von Routing-Tabellen zu einer Mehrzahl von Call-Centres (102A, 108A, 120A, 122A, 124A; 102B, 108B, 120B, 122B, 124B) jeweils mit ein oder mehreren Vertretern, wobei das Verfahren die folgenden Schritte beinhaltet:
Empfangen von Call-Centre-Management-Informationen von ein oder mehreren aus der genannten Mehrzahl von Call-Centres;
Ermitteln einer Routing-Tabelle auf der Basis der genannten Management-Informationen, wobei die genannte Routing-Tabelle Informationen zum Leiten von einen Netzwerk-Skill-Set (Fertigkeiten) erfordernden Anrufen zu Call-Centres gibt, in denen ein oder mehrere Vertreter mit dem genannten Netrwerk-Skill-Set assoziiert sind; und
Übermitteln der genannten Routing-Tabelle zu der genannten Mehrzahl von Call-Centres.

2. Verfahrens nach Anspruch 1, wobei die genannte Ermittlung auf einer Routing-Präferenz basiert, die von den genannten Management-Informationen betroffen ist.

3. Verfahren nach Anspruch 2, wobei die genannte Ermittlung Call-Centres (102A, 108A, 120A, 122A, 124A; 102B, 108B, 120B, 122B, 124B) mit Netzwerk-Skill-Set-Vertretern nach Anrufleitpriorität ordnet und Call-Centres der genannten Routing-Tabelle nach ihrer Rangfolge zuordnet.

4. Verfahren nach Anspruch 3, wobei das genannte Zuordnen das Zuordnen nur einer voreingestellten Zahl der optimalsten Call-Centres, auf der Basis der genannten Rangfolge, zu der genannten Routing-Tabelle nach ihrer Rangfolge beinhaltet.

5. Verfahren nach Anspruch 3, wobei die genannte Ermittlung Folgendes beinhaltet:
Ermitteln des Alters der genannten Management-Informationen, die zuletzt von einem gegebenen Call-Centre erhalten wurden; und
Ausschließen des genannten gegebenen Call-Centre aus der genannten Routing-Tabelle, wenn das genannte Alter einen Maximalwert übersteigt.

6. Verfahren nach Anspruch 1, wobei ein Element der genannten Management-Informationen, von einem genannten Call-Centre, eine Anzahl von Vertretern an dem genannten, dem genannten Netzwerk-Skill-Set zugeordneten Call-Centre umfasst, die untätig sind.

7. Verfahren nach Anspruch 1, wobei ein Element der genannten Management-Informationen, von einem genannten Call-Centre, ein Zeitmaß seit dem letzten Anruf für einen untätigen der genannten, mit dem genannten Netzwerk-Skill-Set an dem genannten einen Call-Centre assoziierten Vertretern umfasst, wobei das genannte Zeitmaß für den genannten einen untätigen der genannten Vertreter länger ist als für irgendeinen anderen untätigen Vertreter aus den genannten, mit dem genannten Netzwerk-Skill-Set an dem genannten einen Call-Centre assoziierten Vertretern.

8. Verfahren nach Anspruch 1, wobei ein Element der genannten Management-Informationen, von einem genannten Call-Centre, ein Zeitmaß seit dem Login für einen untätigen der genannten, mit dem genannten Netzwerk-Skill-Set an dem genannten einen Call-Centre assoziierten Vertreter umfasst, wobei das genannte Zeitmaß für den genannten untätigen der genannten Vertreter länger ist als für irgendeinen anderen untätigen Vertreter unter den genannten, mit dem genannten Netzwerk-Skillset an dem genannten einen Call-Centre assoziierten Vertretern.

9. Verfahren nach Anspruch 1, wobei ein Element der genannten Management-Informationen, von einem genannten Call-Centre, in dem alle genannten, mit dem genannten Netzwerk-Skill-Set assoziierten Vertreter belegt sind, eine Schätzung eines Zeitmaßes umfasst, bis ein genannter, mit dem genannten Netzwerk-Skill-Set assoziierter Vertreter zum Beantworten eines bestimmten Anrufs verfügbar wird.

10. Rechnerlesbares Medium (112) zum Bereitstellen von Programmsteuerung für einen Prozessor (106) in einer Steuerung (104) einer Mehrzahl von Call-Centres (102A, 108A, 120A, 122A, 124A; 102B, 108B, 120B, 122B, 124B), jeweils mit ein oder mehreren Vertretern, wobei die genannte Steuerung zum Verteilen von Routing-Tabellen zu den genannten Call-Centres dient, wobei das genannte rechnerlesbare Medium Code umfasst, der die genannte Steuerung zum Ausführen des Verfahrens nach Anspruch 1 veranlasst.

11. Steuerung (104) für eine Mehrzahl von Call-Centres (102A, 108A, 120A, 122A, 124A; 102B, 108B, 120B, 122B, 124B), jeweils mit ein oder mehreren Vertretern, wobei die genannte Steuerung Folgendes umfasst:
Mittel zum Empfangen von Call-Centre-Management-Informationen von ein oder mehreren aus der genannten Mehrzahl von Call-Centren;
Mittel zum Ermitteln einer Routing-Tabelle auf der Basis der genannten Management-Informationen, wobei die genannte Routing-Tabelle Informationen zum Leiten von einen Netzwerk-Skill-Set erfordernden Anrufen zu Call-Centren mit ein oder mehreren mit dem genannten Netzwerk-Skill-Set assoziierten Vertretern gibt; und
Mittel zum Übermitteln der genannten Routing-Tabelle zu der genannten Mehrzahl von Call-Centres.

12. Kommunikationsnetzwerk, das Folgendes umfasst:
eine Steuerung (104) nach Anspruch 11;
eine Mehrzahl von Call-Centres (102A, 108A, 120A, 122A, 124A; 102B, 108B, 120B, 122B, 124B) jeweils mit ein oder mehreren mit einem Netzwerk-Skill-Set assoziierten Vertretern; und
einen Router (102A, 102B), um auf der Basis der genannten Routing-Tabelle einen den genannten Netzwerk-Skill-Set erfordernden Anruf, der an einem der genannten Call-Centren empfangen wird, zu einem verfügbaren, mit dem genannten Netzwerk-Skill-Set an einem der genannten Call-Centren assoziierten Vertreter zu leiten.

13. Verfahren zum Aktualisieren von Routing-Tabellen in einem Call-Centre, wobei das genannte Verfahren die folgenden Schritte beinhaltet:
Senden von Call-Centre-Management-Informationen zu einer Steuerung (104) für eine Mehrzahl von Call-Centres (1 02A, 108A, 120A, 122A, 124A; 102B, 108B, 120B, 122B, 124B); und
Empfangen, von der genannten Steuerung (104), einer dynamischen Routing-Tabelle, die Informationen zum Leiten von einen Netzwerk-Skill-Set erfordernden Anrufen gibt, wobei die genannte dynamische Routing-Tabelle teilweise auf der Basis der genannten Management-Informationen ermittelt wird.

14. Verfahren nach Anspruch 13, das ferner das Leiten eines eingehenden, den genannten Netzwerk-Skill-Set erfordernden Anrufs zu einem Call-Centre auf der Basis der genannten dynamischen Routing-Tabelle beinhaltet.

15. Verfahren nach Anspruch 13, das ferner das Empfangen, von der genannten Steuerung (104), einer statischen Routing-Tabelle beinhaltet, die Informationen zum Leiten von Anrufen gibt, die den genannten Netzwerk-Skill-Set erfordern.

16. Verfahren nach Anspruch 15, das ferner die folgenden Schritte beinhaltet:
Ermitteln des Alters der genannten dynamischen Routing-Tabelle; und
wenn das genannte Alter einen Maximalwert überschreitet, Basieren des genannten Leitens auf der genannten statischen Routing-Tabelle.

17. Verfahren nach Anspruch 15, wobei das genannte Leiten so konfiguriert ist, dass es auf der genannten statischen Routing-Tabelle basiert wird.

18. Reehnerlesbares Medium (126A) zum Bereitstellen von Programmsteuerung für einen Prozessor (118A) in einem Call-Centre (102A, 108A, 120A, 122A, 124A) in einem Netzwerk von Call-Centres, wobei das genannte Netzwerke eine Steuerung (104) der genannten Call-Centres beinhaltet, wobei das genannte rechnerlesbare Medium Code umfasst, der das genannte Call-Centre zur Ausführung des Verfahrens nach Anspruch 13 veranlasst.

19. Call-Centre (102A, 108A, 120A, 120B, 120C) in einem Netzwerk von Call-Centres, wobei das genannte Netzwerk eine Steuerung der genannten Call-Centres aufweist, wobei das genannte Call-Centre Folgendes umfasst,:
Mittel zum Senden von Call-Centre-Management-Informationen zu der genannten Steuerung (104); und
Mittel zum Empfangen, von der genannten Steuerung, einer dynamischen Routing-Tabelle, die Informationen zum Leiten von einen Netzwerk-Skill-Set erfordernden Anrufen gibt, wobei die genannte dynamische Routing-Tabelle teilweise auf der Basis der genannten Managementinformationen ermittelt wird.

## Revendications

1. Procédé, au niveau d'une unité de commande (104), de distribution de tables de routage à une pluralité de centres d'appel (102A, 108A, 120A, 122A, 124A ; 1028, 108B, 120B, 122B, 124B), chacun ayant un ou plusieurs agents, ledit procédé comprenant :
la réception, depuis un ou plusieurs de ladite pluralité de centres d'appel, d'informations de gestion de centre d'appel ;
la détermination, en fonction desdites informations de gestion, d'une table de routage, ladite table de routage fournissant des informations pour router les appels exigeant un ensemble de compétences de réseau à des centres d'appel ayant un ou plusieurs agents associés audit ensemble de compétences de réseau ; et
la communication de ladite table de routage à ladite pluralité de centres d'appel.

2. Procédé selon la revendication 1, dans lequel ladite détermination est basée sur une préférence de routage, laquelle est affectée par lesdites informations de gestion.

3. Procédé selon la revendication 2, dans lequel ladite détermination classe les centres d'appel (102A, 108A, 120A, 122A, 124A ; 102B, 108B, 120B, 122B, 124B) ayant des agents aux compétences de réseau dans un ordre de priorité de routage des appels et assigne des centres d'appel à ladite table de routage dans l'ordre de classification.

4. Procédé selon la revendication 3, dans lequel ladite assignation comprend l'assignation d'uniquement un nombre pré-établi de centres d'appel les plus optimaux, d'après ladite classification, à ladite table de routage dans l'ordre de classification.

5. Procédé selon la revendication 3, dans lequel ladite détermination comprend en outre :
la détermination d'un âge desdites informations de gestion dernièrement reçues d'un centre d'appel donné , et
l'exclusion dudit centre d'appel donné de ladite table de routage si ledit âge dépasse un maximum.

6. Procédé selon la revendication 1, dans lequel un élément desdites informations de gestion, depuis un dit centre d'appel, comprend un nombre d'agents au niveau dudit centre d'appel assigné audit ensemble de compétences de réseau qui sont inactifs.

7. Procédé selon la revendication 1, dans lequel un élément desdites informations de gestion, depuis un dit centre d'appel, comprend une mesure de temps depuis un dernier appel d'un agent inactif desdits agents associés audit ensemble de compétences de réseau au niveau dudit centre d'appel, dans lequel ladite mesure de temps est plus longue pour ledit agent inactif desdits agents que pour tout autre agent inactif parmi lesdits agents associés audit ensemble de compétences de réseau au niveau dudit centre d'appel.

8. Procédé selon la revendication 1, dans lequel un élément desdites informations de gestion, depuis un dit centre d'appel, comprend une mesure de temps depuis une connexion avec un agent inactif desdits agents associés audit ensemble de compétences de réseau au niveau dudit centre d'appel, dans lequel ladite mesure de temps est plus longue pour ledit agent inactif desdits agents que pour tout autre agent inactif parmi lesdits agents associés audit ensemble de compétences de réseau au niveau dudit centre d'appel.

9. Procédé selon la revendication 1, dans lequel un élément desdites informations de gestion, depuis un dit centre d'appel auquel tous lesdits agents associés audit ensemble de compétences de réseau sont occupés, comprend une estimation d'une mesure de temps avant qu'un dit agent associé audit ensemble de compétences de réseau devienne disponible et puisse répondre à un appel particulier.

10. Support lisible par ordinateur (112) pour fournir une commande de programme pour un processeur (106) dans une unité de commande (104) d'une pluralité de centres d'appel (102A, 108A, 120A, 122A, 124A ; 102B, 108B, 120B, 122B, 124B), chacun ayant un ou plusieurs agents, ladite unité de commande servant à distribuer des tables de routage auxdits centres d'appel, ledit support lisible par ordinateur comprenant un moyen de code qui adapte ladite unité de commande afin d'exécuter le procédé de la revendication 1.

11. Unité de commande (104) d'une pluralité de centres d'appel (102A, 108A, 120A, 122A, 124A ; 102B, 108B, 120B, 122B, 124B), chacun ayant un ou plusieurs agents, ladite unité de commande comprenant :
un moyen pour recevoir, depuis un ou plusieurs de ladite pluralité de centres d'appel, des informations de gestion de centre d'appel ;
un moyen pour détermine, en fonction desdites informations de gestion, une table de routage, ladite table de routage fournissant des informations pour router les appels exigeant un ensemble de compétences de réseau à des centres d'appel ayant un ou plusieurs agents associés audit ensemble de compétences de réseau ; et
un moyen pour communiquer ladite table de routage à ladite pluralité de centres d'appel.

12. Réseau de communications comprenant :
une unité de commande (104) selon la revendication 11 ;
une pluralité de centres d'appel (102A, 108A, 120A, 122A, 124A ; 102B, 108B, 120B, 122B, 124B), chacun ayant un ou plusieurs agents associes à un ensemble de compétences de réseau ; et
un routeur (102A, 102B) pour router, en fonction de ladite table de routage, un appel, exigeant ledit ensemble de compétences de réseau, reçu au niveau de l'un desdits centres d'appel vers un agent disponible associé audit ensemble de compétences de réseau au niveau de l'un desdits centres d'appel.

13. Procédé d'actualisation de tables de routage au niveau d'un centre d'appel, ledit procédé comprenant :
l'envoi, à une unité de commande (104) d'une pluralité de centres d'appel (102A, 108A, 120A, 122A, 124A ; 102B, 108B, 120B, 122B, 124B), d'informations de gestion de centre d'appel ; et
la réception, depuis ladite unité de commande (104), d'une table de routage dynamique qui fournit des informations pour router des appels exigeant un ensemble de compétences de réseau, ladite table de routage dynamique étant déterminée, en partie, en fonction desdites informations de gestion.

14. Procédé selon la revendication 13, comprenant en outre le routage d'un appel entrant exigeant ledit ensemble de compétences de réseau vers un centre d'appel en fonction de ladite table de routage dynamique.

15. Procédé selon la revendication 13, comprenant en outre la réception, depuis ladite unité de commande (104), d'une table de routage statique qui fournit des informations pour router des appels exigeant ledit ensemble de compétences de réseau.

16. Procédé selon la revendication 15, comprenant en outre :
la détermination d'un âge de ladite table de routage dynamique ; et
si ledit âge dépasse un maximum, le fondement dudit routage sur ladite table de routage statique.

17. Procédé selon la revendication 15, dans lequel ledit routage est configuré pour être fondé sur ladite table de routage statique.

18. Support lisible par ordinateur (126A) pour fournir une commande de programme pour un processeur (118A) dans un centre d'appel (102A, 108A, 120A, 122A, 124A), dans un réseau de centres d'appel, ledit réseau comportant une unité de commande (104) desdits centres d'appel, ledit support lisible par ordinateur comprenant un moyen de code qui adapte ledit centre d'appel afin d'exécuter le procédé de la revendication 13.

19. Centre d'appel (102A, 108A, 120A, 120B, 120C) dans un réseau de centres d'appel, ledit réseau comportant une unité de commande desdits centres d'appel, ledit centre d'appel comprenant :
un moyen pour envoyer, ladite unité de commande (104) des informations de gestion de centre d'appel ; et
un moyen pour recevoir, depuis ladite unité de commande, une table de routage dynamique qui fournit des informations pour router des appels exigeant un ensemble de compétences de réseau, ladite table de routage dynamique étant déterminée en partie en fonction desdites informations de gestion.
